(19) Europäisches Patentamt
European Patent Office
Office européen des brevets

(11) EP 0 900 767 A1

## (12) EUROPÄISCHE PATENTANMELDUNG

(43) Veröffentlichungstag:
10.03.1999 Patentblatt 1999/10

(51) Int. Cl.⁶: $C02F\ 11/00$, $C02F\ 11/14$

(21) Anmeldenummer: 98116030.2

(22) Anmeldetag: 25.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 03.09.1997 DE 19738378

(71) Anmelder:
Schwidop, Wolf-Dieter, Dr.
04523 Wiederau (DE)

(72) Erfinder:
Schwidop, Wolf-Dieter, Dr.
04523 Wiederau (DE)

(74) Vertreter:
Strobel, Wolfgang, Dipl.-Ing.
Kroher . Strobel
Rechts- und Patentanwälte
Bavariaring 20
80336 München (DE)

### (54) Verfahren zur Verwertung von Klärschlamm

(57) Die vorliegende Erfindung betrifft ein Verfahren zur Verwertung von Klärschlamm, insbesondere von schwermetallbelasteten Klärschlamm aus Abwasserbehandlungsanlagen, bei dem die darin enthaltenen Schadstoffe immobilisiert werden. Das Verfahren zeichnet sich dadurch aus, daß dem Klärschlamm eine Menge von 2 bis 300% der Trockensubstanz des Klärschlamms ein Reaktiv zugesetzt wird, das mit dem Klärschlamm vermischt wird, daß das Reaktiv als Hauptbestandteile alkalisches Alumosilikat, Eisen(II)Oxid und nicht abgebundenen Gips enthält, und daß der Klärschlamm auf weniger als 25% Trockensubstanz, vorzugsweise auf zwischen 15 und 20% Trockensubstanz entwässert wird.

**Beschreibung**

Die vorliegende Erfindung betrifft ein Verfahren zur Verwertung von Klärschlamm, insbesondere von schwermetallbelastetem Klärschlamm aus Abwasserbehandlungsanlagen, nach dem Oberbegriff des Anspruchs 1.

Die Behandlung von Abwasser stellt ein ständig zunehmendes Problem dar, da sich in den Abwässern zunehmend Schwermetalle befinden. Früher wurden schadenstoffbelastete Substanzen meist in mehr oder weniger dichte Behältnisse verfüllt und auf Sondermülldeponien endgelagert. Zwar sind damit die Schadstoffe aus der unmittelbaren Umgebung beseitigt, dennoch können potentielle Gefährdungen der Umwelt, beispielsweise aufgrund des möglichen Undichtwerdens der Lagerbehältnisse nicht ausgeschlossen werden.

Als ein Weg der Entsorgung von Abfall wurde dessen Verbrennung ins Auge gefaßt. Aus der DE 37 33 532 A1 ist ein Verfahren zur Entsorgung eines bei der Abwasserreinigung anfallenden Klärschlamms bekannt, bei dem der Klärschlamm vor dem Einsatz in einem Verbrennungskessel auf einen Feststoffgehalt von mindestens 30 Gew.-% vorzugsweise mindestens 40 Gew.-% entwässert wird. Dies benötigt zunächst aufwendige Entwässerungseinrichtung des Klärschlamms und anschließend entsprechende Verbrennungsanlagen, wobei zudem die Schadstoffe aus den Verbrennungsgasen wiederum herausgefiltert werden müssen. Insgesamt ist diese Lösung besonders teuer und trägt aufgrund der Verbrennungs-Abgase nicht zur Umweltverbesserung bei.

Aus der DE 32 05 717 C2 ist ein Verfahren zum Fixieren von in kommunalen oder industriellen Klärschlämmen enthaltenen Schadstoffen, insbesondere Schwermetallen bekannt, bei dem die behandelten Schlämme gefahrlos auf land- oder forstwirtschaftlich genutzte Flächen aufgebracht werden können sollen. Dieses Verfahren schlägt vor, die Schadstoffe an zugegebene glimmerarige Tonmineralien bzw. Tonmineralgemische durch Vermischung anzulagern, wobei dem Gemisch Sand und Kies zugemischt wird und das Gesamtgemisch aus 20 Vol.-% Tonmineralien bzw. Tonmineralgemischen, etwa 30 Vol.-% Klärschlamm und etwa 50 Vol.-% Sand und Kies besteht. Dabei zeigt der hohe Anteil von 50 Vol.-% von Sand und Kies sofort den Nachteil dieses Verfahrens, da erhebliche Mengen an zusätzlichem Material, nämlich ca. 70% zugegeben werden müssen, um 30% der Gesamtmenge an Klärschlamm einbinden zu können.

Aus der DE 44 29 346 A1 ist ein Verfahren zum Aufbereiten von Klärschlamm und Verwendung des Endproduktes bekannt, wobei Ziel dieses Verfahrens ist, einen Baustoff mit besonderer Dichtwirkung zu erzeugen, der nutzbringend eingesetzt werden kann. Hierbei soll eine sehr geringe Rißanfälligkeit der Dichtschicht aus dem Mischprodukt gegenüber einer reinen Tonabdichtung gewährleistet sein und die Stabilität durch ein besonders hohen pH-Wert zwischen 11 und 12 erreicht werden. Damit dient das Endprodukt zum Aufbau einer Deponieabdeckung und nicht zur Ausbringung auf land- und forstwirtschaftliche Flächen.

Der vorliegenden Erfindung liegt deshalb die Aufgabe zugrunde, ein Verfahren zur Verwertung von Klärschlamm, insbesondere von schwermetallbelastetem Klärschlamm aus Abwasserbehandlungsanlagen anzugeben, mit dem auf einfache Weise die im Abwasser vorhandenen Schwermetalle gebunden werden können und bei dem das sich ergebende Material gefahrlos auf land- oder forstwirtschaftlich genutzte Flächen aufgebracht werden kann.

Diese Aufgabe wird durch die Merkmale des Anspruchs 1 gelöst.

Erfindungsgemäß wird diese Aufgabe dadurch gelöst, daß dem Klärschlamm in einer Menge von 2 bis 200% der Trockensubstanz des Klärschlamms ein Reaktiv zugesetzt wird, das mit dem Klärschlamm vermischt wird, daß das Reaktiv als Hauptbestandteile alkalisches Alumosilikat, Eisen(II)Oxid und ungebundenen Gips enthält, und daß der Klärschlamm auf weniger als 25% Trockensubsanz, vorzugsweise zwischen 15 und 20% Trockensubstanz entwässert wird.

Es hat sich nämlich herausgestellt, daß eine zu starke Entwässerung des Klärschlamms, wie diese beim Stand der Technik gefordert wird, nachteilig auf die durch das Vermischen der Substanzen ablaufenden Reaktionen auswirkt. Erst durch relativ geringe Entwässerung wird eine optimale Umwandlung und Bindung der schwermetallbelasteten Abfallstoffe erreicht.

Durch das Erzielen einer chemischen Verbindung mit den Substanzen des Reaktivs und den Schadstoffen wird eine Stoffumwandlung bewirkt. Dabei wurde gefunden, daß ein pulverförmiges Gemisch aus alkalisch reagierenden Stoffen mit hoher Basenkapazität geeignet ist, diese Umwandlung zu erreichen, wodurch der Klärschlamm in ein Bodensubstrat umgewandelt werden kann.

Die wesentlichen Bestandteile bzw. Hauptbestandteile des Reaktives sind dabei ein Gemisch aus alkalischem Alumosilikat, Eisen(II)Oxid und nicht abgebundenen Gips. Als besonders vorteilhaft hat sich dabei ergeben, daß ostelbische Braunkohlenflugasche als Bestandteil dieses Reaktivs Verwendung finden kann.

Mit besonderem Vorteil hat sich dabei herausgestellt, daß das Reaktiv folgende Stoffe, in Masse-% angegeben, aufweist:

2

| 20-54% | $SiO_2$ |
|---|---|
| 8-43% | $Al_2O_3$ |
| 3-33% | Fe (als Eisen(II)- und Eisen(III)Oxid) |
| 1,3-7% | MgO |
| 3-25% | $SO_3$ |
| 12-58% | CaO. |

Zudem können weiterhin auch witere Mineralien und Spurenelemente in geringen Masse-% enthalten sein. Mit Vorteil erfolgt das Vermischen des Klärschlamms mit dem Reaktiv in der Weise, daß der Klärschlamm im geeigneten, großvolumigen Mischbehälter, beispielsweise einen Trogmischer, gegeben wird, daß danach das Reaktiv gemäß den obigen Anteilen beigemengt wird und anschließend beide Komponenten solange vermischt werden, bis eine optimale Vermengung derselben erreicht wird.

Anschließend wird der Mischer entleert und das Gemenge wird entweder zum Durchreagieren und Abbinden in Container verladen oder dem Gemenge wird, wenn der Wasseranteil zu hoch ist, in einer Trockenanlage, ähnlich einem Getreidetrockner, noch eine definierte Menge an Feuchtigkeit entzogen. Das auf diese Weise gewonnene Produkt ist ein schollenartiges, erdiges, braun-graues, hochwertiges Kultursubstrat, einem Humus ähnlich und kann landwirtschaftlichen Böden als Endprodukt zugesetzt werden. In diesem Produkt, das inert ist, ist ein Herauslösen von Schadstoffen nicht möglich, es können jedoch Nährstoffe herausgelöst werden. Insbesondere können alle unerwünschten Schwermetallverbindungen derart in dem Endprodukt immobilisiert werden, daß deren Herauslösung nur unter ganz extremen externen Bedingungen, beispielsweise durch die konzentrierte Einwirkung von Salzsäure oder Königswasser, möglich ist.

Im einzelnen lassen sich die durch die Anwendung des erfinderischen Verfahrens stattfindenden Einbauvorgänge bzw. Umwandlungen wie folgt darstellen:

$$SM^{x+} + xOH^- \rightarrow SM(OH)_x \qquad\qquad I.$$

Schwer- bis schwerstlöslich im Bereich pH>7

$$SM^{x+} + Al_2Si_2O_8{}^{2-} \rightarrow SMAl_2Si_2O_8{}^{(x-2)-} \qquad\qquad II.$$

$$SM^{x+} + Al_2Si_2O_{13}{}^{3-} \rightarrow SMAl_2Si_2O_{13}{}^{(x-3)-}$$

nahezu irreversibler Einbau von SM-Ionen; Freigesetzte Ca- und Al-Ionen sichern Alkalität

$$2Me^+ + S^{2-} \rightarrow Me_2S \qquad\qquad III.$$

$$Me^{2+} + S^{2-} \rightarrow MeS$$

$$2Me^{3+} + 3S^{2-} \rightarrow Me_2S_3$$

SM-Sulfide sind die schwerstlöslichen anorganischen Verbindungen. Zu Metallsulfid reagieren auch Ca und Mg mit Mercaptanen $\rightarrow$ Geruchsbindung

$$SM^{2+} + SO_4{}^{2-} \rightarrow SMSO_4 \qquad\qquad IV.$$

Einige Sulfate 2-wertiger Schwermetalle sind ebenfalls schwerlöslich

$$CaSO_4 + 2H_2O \rightarrow CaSO_4{}^*2H_2O \qquad\qquad V.$$

Gipsanhydrid bindet ab und verstärkt die Struktur durch Kristallwasseraufnahme

$$CaO + H_2O \rightarrow Ca(OH)_2 \qquad\qquad VI.$$

Gelöster Kalk erzeugt die für die Hygienisierung notwendige Alkalität.

Die im chemischen Gleichgewicht weit auf der Seite der Produkte freiwerdenden Ionen sind permanent durch die Kapazität der ständig innerhalb der Produkte parallel laufenden anderen chemischen Prozesse immobilisierbar.

Unter diesem alkalischen Milieu werden außerdem ungesättigte organische Verbindungen vom ebenfalls vorhandenen Eisen(II)Oxid reduziert und somit als Substrat für die Ansiedlung und biologische Oxidation von Bodenorganismen (Humifizierung) und als Kohlenstoffquelle für die Pflanzen wirksam. Dabei werden u. a. Amine, Aldehyde, Ketone, Ester, Phenole und Carbonsäuren defunktionalisiert bzw. die funktionellen Gruppen mineralisiert. So können sie wieder als Nährstoffe von Pflanzen und Bodenmikroorganismen für den Stoffwechsel eingesetzt werden, wie sich aus den nachfolgenden Gleichungen ergibt:

$$R\text{-}NH_2 + 2Fe^{2+} + 3OH^- \rightarrow R\text{-}H + Fe_2O_3 + NH_4^+ \qquad\qquad \text{VII.}$$

Mit Nitrat wichtige N-Quelle und Geruchsbindung

$$Ph\text{-}COH + 4Fe^{2+} + 8OH^- \rightarrow R\text{-}CH_3 + 2Fe_2O_3 + 3H_2O \qquad\qquad \text{VIII.}$$

$$Ph\text{-}COH + 2Fe^{2+} + 4OH^- \rightarrow PhH + Fe_2O_3 + 2H_2O \qquad\qquad \text{XI.}$$

$$R\text{-}COOH + 6Fe^{2+} + 12OH^- \rightarrow R\text{-}CH_3 + 3Fe_2O_3 + 5H_2O \qquad\qquad \text{X.}$$

Mit besonderem Vorteil laufen die vorgenannten Reaktionen bereits bei Temperaturen ab 0°C eigenständig ab, so daß bereits schon durch den Energieeintrag beim Mischvorgang und die durch nach der Ablagerung vorzunehmende Trocknung der Reaktionsvorgang so beschleunigt werden, daß der Bindungs- und und Umbauprozeß, der normalerweise Tage bis Wochen dauern kann, auf Stunden reduziert wird.

Die Erfindung wird nachfolgend anhand eines Ausführungsbeispiels näher erläutert:

In einer Abwasserbehandlungsanlage ist Klärschlamm in einer Menge von 30.000 t, bestehend aus 24.000 t Wasser und 6.000 t Trockensubstanz, angefallen. Dem Klarschlamm werden 8.000 t eines Reaktivs, bestehend aus 80 t Wasser und 7.920 t Trockensubstanz, zugesetzt. Daraus ergibt sich ein Gesamtgut mit 38.000 t, bestehend aus 24.080 t Wasser und 13.920 t Trockensubstanz.

Das erfindungsgemäße Verfahren läuft bezogen auf eine Charge mit einer Durchsatzmenge von 0,85 t wie folgt ab:

Dauer des Beschickens des Mischers:     60 s
Dauer des Mischvorgangs:     90 s
Dauer des Entleerens des Mischers:     30 s
Dauer des Abbindens und Trocknens:     mindestens 1 h, höchstens 10 Tage.

Das diesem Ausführungsbeispiel zugrundeliegende Reaktiv setzt sich aus folgenden Hauptbestandteilen zusammen:

$SiO_2$     = 32,4 Masse-%
$Al_2O_3$     = 9,7 Masse-%
$Fe_2O_3$     = 14,2 Masse-%
$CaO$     = 20,9 Masse-%
$MgO$     = 6,6 Masse-%
$SO_3$     = 8,4 Masse-%.

Mit der vorliegenden Erfindung wird somit ein Verfahren zur Verwertung von Klärschlamm, insbesondere von schwermetallbelasteten Klärschlamm aus Abwasserbehandlungsanlagen geschaffen, bei dem durch Zufügen weniger Hauptbestandteile und ausreichender Flüssigkeitsmenge eine entsprechende Reaktion abläuft, wodurch die im Klärschlamm vorhandenen Schwermetalle gebunden werden können. Diese Bindung ist derart stabil, daß ein Lösen der Schwermetallsubstanzen aus dem Klärschlamm nicht mehr oder nur unter extremen in der Land- und Forstwirtschaft nicht vorhandenen Bedingungen erfolgen kann. Damit kann das gebildete Bodenmaterial, auch "Stützkorn" genannt, gefahrlos auf land- und forstwirtschaftliche Böden ausgebracht werden. Damit dieses Stützkorn natürliche Bodenfunktionen übernehmen kann wird der pH-Wert im Eluat des Produkts von 9,5 nicht überschritten.

**Patentansprüche**

1.  Verfahren zur Verwertung von Klärschlamm, insbesondere von schwermetallbelasteten Klärschlamm aus Abwasserbehandlungsanlagen, bei dem die darin enthaltenen Schadstoffe immobilisiert werden, dadurch gekennzeichnet, daß im Klärschlamm in eine Menge von 2 bis 200% der Trockensubstanz des Klärschlamms ein Reaktiv zugesetzt wird, das mit dem Klärschlamm vermischt wird, daß das Reaktiv als Hauptbestandteil alkalisches Alumosilikaten, Eisen(II)Oxid und nicht abgebundenen Gips enthält, und daß der Klärschlamm auf weniger als 21% Trockensubstanz, vorzugsweise zwischen 5 und 20% Trockensubstanz entwässert wird.

2.  Verfahren nach Anspruch 1, dadurch gekennzeichnet, daß das Reaktiv in Masse-% folgende Stoffe aufweist:

| | |
|---|---|
| 20-54% | $SiO_2$ |
| 8-43% | $Al_2O_3$ |
| 3-33% | Fe (Eisen(II)- und Eisen(III)Oxid) |
| 1,3-7% | MgO |
| 3-25% | $SO_3$ |
| 12-58% | CaO. |

3.  Verfahren nach Anspruch 1 oder 2, dadurch gekennzeichnet, daß durch die Reaktion des Reaktivs mit den Bestandteilen des Klärschlamms ein inertes "Stützkorn" gebildet wird, welches die Schadstoffe bindet und mineralische Nährstoffe freisetzen kann.

4.  Verfahren nach Anspruch 1 bis 3, dadurch gekennzeichnet, daß der pH-Wert des gebildeten Produktes kleiner als 9,5 ist.

5.  Verfahren nach einem der Ansprüche 1 bis 4, dadurch gekennzeichnet, daß die Reaktionen zwischen Klärschlamm und Reaktiv in einem Temperaturbereich zwischen 0°C und 150°C während und nach dem Vermischen der Komponenten ablaufen.

Europäisches Patentamt

**EUROPÄISCHER RECHERCHENBERICHT**

Nummer der Anmeldung

EP 98 11 6030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 124 405 A (QUIENOT JEAN) 7. November 1978 | 1,3-5 | C02F11/00 C02F11/14 |
| A | * Spalte 4, Zeile 49-52; Ansprüche 1,5,10-12; Beispiel 5 * --- | 2 | |
| A | US 4 028 130 A (WEBSTER WILLIAM C ET AL) 7. Juni 1977 * Ansprüche 1,3,7,8 * --- | 1-5 | |
| A | DE 36 34 650 A (HOELTER GMBH) 19. Mai 1988 * Spalte 3, Zeile 16-19; Ansprüche 1,2,9,10,12,16,24 * --- | 1-5 | |
| A | CH 678 018 A (SALZBURGER STADTWERKE AG) 31. Juli 1991 * das ganze Dokument * --- | 1-5 | |
| A | FR 2 482 974 A (BOULONNAIS CHAUX DOLOMIES) 27. November 1981 * das ganze Dokument * ----- | 1,2,4,5 | |

RECHERCHIERTE SACHGEBIETE (Int.Cl.6)

C02F
C04B

Der vorliegende Recherchenbericht wurde für alle Patentansprüche erstellt

| Recherchenort | Abschlußdatum der Recherche | Prüfer |
|---|---|---|
| DEN HAAG | 8. Dezember 1998 | Gruber, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------
& : Mitglied der gleichen Patentfamilie, übereinstimmendes Dokument